# EUROPEAN PATENT SPECIFICATION

(11) **EP 1 084 204 B1**
(45) Date of publication and mention of the grant of the patent: **04.06.2003**
(21) Application number: 98945849.2
(22) Date of filing: 03.09.1998
(51) Int. Cl.: C09J 7/02, B29C 47/30, B29C 47/16

(54) **STRIPED ADHESIVE-COATED TAPE**
KLEBEBAND MIT STREIFENFÖRMIGER HAFTKLEBERANORDNUNG
RUBAN ENDUIT D'ADHESIF RAYE

(30) Priority: 24.04.1998 US 65941
(43) Date of publication of application: 21.03.2001
(73) Proprietor: MINNESOTA MINING AND MANUFACTURING COMPANY, St. Paul, Minnesota 55133-3427 (US)
(72) Inventor: GRUENEWALD, Larry, E., Saint Paul, MN 55133-3427 (US); MAIER, Gary, W., Saint Paul, MN 55133-3427 (US); MARCUS, Barbara, J., Saint Paul, MN 55133-3427 (US)
(74) Representative: Meyers, Hans-Wilhelm, Dr.Dipl.-Chem.
(86) International application number: US9818288
(87) International publication number: WO99055790

(56) References cited:
- EP-A- 0 279 579
- EP-A- 0 388 036
- EP-A- 0 701 010
- DE-A- 3 132 637
- DE-A- 3 906 120
- US-A- 5 622 761

## Description

### TECHNICAL FIELD

The present invention relates to tape. More particularly, the present invention relates to striped adhesive coated tape.

### BACKGROUND OF THE INVENTION

Conventional adhesive tapes, such as box sealing tape, are formed with a backing layer, an adhesive layer, and a low adhesion backsize layer (LAB). These pressure-sensitive adhesive tapes are usually prepared by a process in which a layer of pressure-sensitive adhesive is applied to one major surface of the backing layer across the entire width of the backing layer, and a layer of LAB is applied to the other major surface of the backing layer. Some preferred adhesives include rubber-based adhesives which include a blend of natural or synthetic rubber and tackifier resin. Styrene-isoprene-styrene block copolymer based adhesives are often used. Acrylate-based adhesives are also used.

Box sealing tape is a well-known type of adhesive tape which is typically used to secure the flaps or covers of a box so that the box will not accidentally open during normal shipment, handling, and storage. It maintains the integrity of a box throughout its entire distribution cycle. Box sealing tape can be used on other parts of boxes and on substrates other than boxes and can be used to function similarly to labels. These tapes can he made in roll or pad form. They can be transparent, translucent, or opaque and can have information printed or otherwise applied to the tape.

In most known applications, the adhesive layer is applied to the backing layer to completely cover the backing layer. In some applications the adhesive layer is applied in stripes to the backing layer and is then smoothed, for example, to spread the adhesive so that it covers the entire backing layer. In other applications, the adhesive layer is applied in stripes and remains in stripes on the backing layer. Some examples of this include WO 96/05108 and U.S. Patent Nos. 5,217,307; 3,885,559; and 3,811,438. In these applications, the non-adhesive stripes are relatively wide and function as non-adhesive portions. That is, they are intended to be portions of the tape that do not adhere to a substrate. The adhesive and non-adhesive portions are not intended to permit the non-adhesive stripes to be part of a greater adhesive portion of the tape that functions as a continuous band of adhesive such that the uncoated portions do not form a functional non-adhesive portion.

U.S. Patent Nos. 4, 386,998 and 4,391,856 disclose contact coating heads that have a series of orifices which apply stripes of adhesive layers onto a substrate. These patents are representative of known coating systems in which the heads contact the substrate on which the adhesive is coated. These dies are typically formed of a one piece construction, which is a round stock of metal with the center drilled out. The center cavity is the adhesive distribution manifold. A series of holes are drilled along the length of the die to the manifold. Adhesive is pumped into the manifold, and exits the die through the holes along the length of the die. The die is brought into contact with the backing on a free span of web, generally located between two idler rolls. The lip of the die is used to level and smooth the coating. High viscosity materials, such as hot melt inch adhesives, are difficult, if not impossible to smooth on a free span of web, because the web tension is not sufficient to create enough pressure or resistance to permit adequate smoothing. Therefore, these contact dies are typically used for lower viscosity materials (less than 10,000 centipoise).

U.S. Patent Nos. 4,774,109 and 4,844,004 also disclose coaters which apply beads of liquid onto a substrate using contact or close proximity dies.

U.S. Patent Nos. 5,458,291 and 5,636,790 disclose non-contact hot melt adhesive die coaters which create strands of adhesive at the die and apply them onto a substrate. The adhesive strands are fiberized using hot air streams and are randomly disposed on the substrate as a thin coating.

PCT Publication No. WO 96/05108 discloses sealing boxes with shortened flaps using a partially coated adhesive tape. The tape has at least two wide stripes of adhesive separated by a wider portion of non-adhesive. There is no disclosure of using narrow stripes of adhesive And there is particularly no disclosure of replacing a continuous band of adhesive with a plurality of stripes or of creating a continuous band of adhesive with a plurality of stripes.

EP-A-0 279 579 discloses irregular section adhesive sheets which are coated on one side with wide stripes or segments of adhesive separated by narrow uncoated stripes, thus facilitating the application of the sheet without inclusion of air pockets. This patent application does not disclose tapes which have non-adhesive second segments that are part of the adhesive portion. The sheets disclosed therein have manifold possible applications, but not anyone is directed to sealing tapes.

### SUMMARY OF THE INVENTION

The invention is an adhesive tape that has a backing having a first side and a second side, and a plurality of first segments of first adhesive on the first side of the backing. The plurality of segments and any adjacent uncoated segments, wherein the plurality of first segments are separated by the plurality of second segments and wherein the width of the segments and the properties of the adhesive are selected such that the plurality of first segments and the plurality of second segments together create an adhesive portion of the tape that functions as a continuous band of adhesive such that the uncoated segments are part of the adhesive portion and do not form a functional non-adhesive portion.

The segments can be stripes and can have a width selected in combination with each other to control the tape properties.

The tape has similar adhesive performance characteristics as a compositionally similar tape having the same backing and at least the same coating weight of the same adhesive coated across the entire surface of the backing. The tape can use at least 10% less adhesive as a similar tape having the same thickness of the same adhesive coated across the entire width of the tape.

In one version the tape has at least one first portion and at least one non adhesive second portion. The first and second portions are adjacent each other and all adhesive stripes are spaced across the first portions of the tape. The second portions can include a plurality of stripes of adhesive or non-adhesive, or uncoated backing. The ratio of the width of the adhesive stripes to the width of the uncoated stripes can range from 2:1 to 10:1; the width of the adhesive stripes can range from 0.0127 to 0.1524 cm; and the width of the uncoated stripes between adjacent adhesive stripes can range from 0.0635 to greater than 0.0 cm.

The adhesive stripes can be located to contact each other to form a coating having a nonuniform thickness. The adhesive stripes can appear to be ribs which appear to reinforce the tape.

The adhesive tape can include at least first and second adhesives. The first adhesive can be selected to perform different functions than the second adhesive, broadening the range of effectiveness of the adhesive tape. At least one stripe of the first adhesive can overlap at least part of at least one stripe of the second adhesive. Also, the tape can have the first and second adhesives located along at least a portion of at least one edge of the tape. In another modification, the tape can include an LAB layer on the second side of the backing. The first adhesive adheres more strongly to the backing than to the LAB and the second adhesive adheres more strongly to the LAB than to the backing when the tape is wound into a roll having a plurality of winds of tape. When the tape is subsequently unwound, the first adhesive remains on the first side of the backing and the second adhesive transfers to the LAB layer on the second surface of the backing of the wind of tape underneath it.

The adhesive tape can be a box sealing tape. The backing can be translucent and the adhesive stripes appear, through the backing, to be ribs. The box sealing tape can have adhesive performance characteristics at least as good as a conventional box sealing tape having adhesive of the same coating weight.

The invention is also a method of making adhesive box sealing tape. The method includes selecting a backing having a first side and a second side; selecting at least a first adhesive to coat on at least part of the first side of the backing; selecting a desired coating weight of adhesive; selecting a width of the first adhesive stripes and a width greater than zero of uncoated stripes in combination with each other to attain desired tape properties; and coating a plurality of first stripes on the first side of the backing. The coating step includes drop die coating the first stripes on the backing without causing any "necking-down" problems of the stripes.

The method can also include passing the adhesive stripe-coated backing through a roller nip to flatten the adhesive stripes. The method can also include passing the adhesive through a plurality of orifices in at least one multiple orifice drop die to create adhesive stripes while the adhesive is being coated onto the backing. The method can also include providing relative lateral movement between the drop die and the backing.

The invention is also a die for coating a substrate. The die includes a first die block and a second die block. The second die block is located adjacent the first die block to form a first slot between the first die block and the second die block that has an exit at the front of the first and second die blocks. Fluid is supplied to the slot and a face plate is mounted across the fronts of the die blocks. The face plate has a plurality of orifices such that fluid flowing in the die through the slot exits through the orifices in the face plate in a plurality of stripes. The face plate is easily removable and replaceable to facilitate cleaning the die and to facilitate changing the orifice pattern to change the pattern of coated stripes on the substrate.

The means for supplying fluid can include a first manifold located in the die and formed in at least one of the die blocks. Also, the means for supplying fluid can include a second manifold located in the die and formed in at least one of the two die blocks and a second slot. The die can coat a first coating through the first slot and a second coating through the second slot.

### BRIEF DESCRIPTION OF THE DRAWINGS

Figure 1 is a cross-sectional view of an adhesive tape according to one embodiment of the present invention.
Figure 2 is a partial cross-sectional view of an adhesive tape according to another embodiment of the present invention.
Figure 3A is a cross-sectional view of several winds of tape according to another embodiment of the present invention. Figure 3B is a cross-sectional view of the tape of Figure 3A after unwinding.
Figure 4 is a top view of an adhesive tape according to another embodiment of the present invention.
Figure 5A is a cross-sectional view of an adhesive tape according to another embodiment of the present invention. Figure 5B is a cross-sectional view of an adhesive tape according to another embodiment of the present invention.
Figure 6 is a top view of an adhesive tape according to another embodiment of the present invention.
Figure 7 is a top view of an adhesive tape according to another embodiment of the present invention.
Figures 8A, 8B, 8C. 8D, 8E, 8F, 8G, 8H, and 81 are cross-sectional views of differently shaped adhesive stripes.
Figure 9 is a cross-sectional view of an adhesive tape according to another embodiment of the present invention.
Figure 10 is a perspective view of a multiple orifice drop die of the present invention.
Figure 11 is a cross-sectional view of the multiple orifice drop die of Figure 10.
Figure 12 is a front view of the face plate of the die of Figure 10.
Figure 13 is a perspective view of a multiple orifice drop die according to another embodiment of the present invention.

### DETAILED DESCRIPTION

The invention is an adhesive tape having segments of adhesive. A segment is defined as any discrete portion. Segments include dots, blobs, and stripes, and can have any shape. A stripe is a long narrow band. It can be continuous or discontinuous. It can be linear or non-linear, such as angular or curved.

This tape with stripes of adhesive can use less adhesive, by coating weight, per unit area of backing than would be used if a uniform, continuous coating of adhesive were applied across the entire width of the tape, as with known tapes. Surprisingly, even with reduced adhesive, the tape is able to display functionally indistinguishable properties to compositionally similar fully-coated tapes. Less adhesive can be used to attain the same performance as known tapes or the same amount of adhesive can be used to attain better performance. By using relatively narrow stripes of adhesive and relatively narrow stripes or areas of non-adhesive between adjacent adhesive stripes (in contrast to using wider stripes), the tape functions well. Surprisingly, the inventors have found that narrow stripes of adhesive separated by narrow (and sometimes narrower) uncoated stripes can increase the bonding effectiveness of the tape. These narrow stripes could permit air between the tape and the surface to which it is adhered to escape to prevent entrapping air bubbles. Based on the way the tape lays down on surfaces, this could also enable the tape to be more flexible, increasing bonding strength. The plurality of adhesive stripes and any adjacent uncoated stripes together create an adhesive portion of the tape that functions as a continuous band of adhesive such that the uncoated portions are part of the adhesive portion and do not form a functional non-adhesive portion. This is contrary to the known tapes. In one embodiment of this invention, a continuous band of adhesive is replaced with a plurality of stripes; in another embodiment, a continuous band of adhesive having a varying thickness and a corrugated appearance is created with a plurality of stripes.

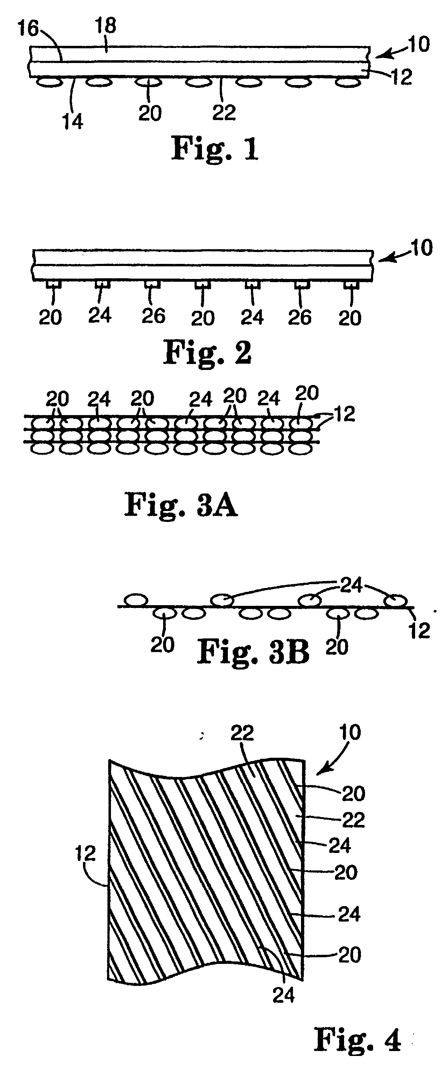

The tape can be used to replace any known type of tape. Referring to Figure 1, the tape 10 includes a backing layer 12, having first and second sides 14, 16. Optionally, a low adhesion backsize (LAB) layer 18 is coated on the second side 16. A plurality of stripes 20 of adhesive are coated on the first side 14. The adhesive stripes 20 are separated by uncoated lanes or stripes 22. In Figure 1, adhesive stripes 20 of only a first adhesive arc shown. Optionally, filaments such as glass fibers can be added to the backing layer 12 or the adhesive stripes 20.

The backing layer 12 can be any known material used for backing layers for a particular tape. For example, if the tape is a box scaling tape, the backing layer 12 is any material (which can be a single composition or a blend of materials) or layers of materials that are used for box sealing tape. The backing layer 12 could be, for example, cloth, paper, metal foil, or plastic film. Suitable paper backings include saturated flatstock and crepe. Suitable plastic film backings include polypropylene, polyethylene, copolymers of polypropylene and polyethylene, polyesters, and vinyl acetates. The polypropylene can be cast film, monoaxially oriented polypropylene (MOPP), biaxially oriented polypropylene (BOPP) or simultaneously biaxially oriented polypropylene (SBOPP). The backing material can be compostible, degradable, colored, printable, printed, and can be of different surface textures or embossed or extensible.

The adhesive 20 can be virtually any adhesive. The adhesive can include hot melt-coated formulations, transfer-coated formulations, solvent-coated formulations, and latex formulations, as well as laminating, thermally-activated, and water-activated adhesives and bonding agents. Useful adhesives according to the present invention include all pressure sensitive adhesives. Pressure sensitive adhesives are well known to possess properties including: aggressive and permanent tack, adherence with no more than finger pressure, and sufficient ability to hold onto an adherend. Examples of adhesives useful in the invention include those based on general compositions of polyacrylate; polyvinyl ether; diene rubber such as natural rubber, polyisoprene, and polybutadiene; polyisobutylene; polychloroprene; butyl rubber; butadiene-acrylonitrile polymer; thermoplastic elastomer; block copolymers such as styrene-isoprene and styrene-isoprene-styrene (SIS) block copolymers, ethylene-propylene-diene polymers, and styrene-butadiene polymers; poly-alpha-olefin; amorphous polyolefin; silicone; ethylene-containing copolymer such as ethylene vinyl acetate, ethylacrylate, and ethyl methacrylate; polyurethane; polyamide; epoxy; polyvinylpyrrolidone and vinylpyrrolidone copolymers; polyesters; and mixtures or blends (continuous or discontinuous phases) of the above. Additionally, the adhesives can contain additives such as tackifiers, plasticizers, fillers, antioxidants, stabilizers, pigments, diffusing materials, curatives, fibers, filaments, and solvents. Hot melt adhesives are preferred for coating stripes. Also, each adhesive stripe can he formed of multiple components of continuous phases; that is, in a single stripe there can be different materials side-by-side. Also, the adhesive optionally can he cured by any known method.

A general description of useful pressure sensitive adhesives may be found in Encyclopedia of Polymer Science and Engineering, Vol. 13, Wiley-Interscience Publishers (New York, 1988). Additional description of useful pressure sensitive adhesives may be found in Encyclopedia of Polymer Science and Technology, Vol. 1, Interscience Publishers (New York, 1964).

If required, any known LAB materials can be used. Suitable materials for the LAB layer 18 include polyurethanes, silicones, fluorochemicals, acrylates, polyvinylacetates, and combinations. Numerous other layers can be added to the tape, such as primers to increase the adhesion of adhesive layer to backing layer. Also, printed material can be located on the first side of the backing layer under the adhesive, or on the second side of the backing layer either under, within, or over any LAB layer 18. This printed material can be advertising, instructions, or other information. The tape could contain a wide variety of additives such as deodorants, perfumes, antistatic materials, imaging and indicating materials, and encapsulated cleaning chemicals. Also, the backing layer can be modified by flame treatment, corona treatment, and roughening.

In the embodiment shown in Figure 1, the adhesive is applied in narrow lanes or stripes 20 separated by narrower uncoated stripes 22. The coated adhesive stripes 20 can be 1.27 cm (0.50 in) wide and the uncoated stripes 22 can be 0.025 cm (0.010 in) wide creating a ratio of stripe width to uncoated lane width of 50:1. This ratio can be as low as 2:1 and in some embodiments the ratio can be even lower or the width of the stripes can be less than that of the uncoated lanes. In one embodiment, there are 100 stripes per 15.24 cm (100 per 6 in). More or fewer stripes also can be used.

The adhesive stripes 20 will be thicker (higher) at their highest point compared to a fully coated tape with the same coating weight of adhesive per unit area (length by width) of tape. Another way to view this is that for a given desired thickness of adhesive, less adhesive can be used to coat stripes than to flood coat the entire backing. Regardless of whether this invention is used to coat (a) the same or thicker stripes with lower coating weight of adhesive or (b) stripes with comparable coating weight, the striped tape of this invention has (a) comparable or (b) improved adhesive performance characteristics, when tested on the same substrate, as a compositionally similar tape having the same adhesive coated across the entire surface of the backing and having more coating weight of adhesive. For a conventional box sealing tape, a typical fully coated adhesive thickness range is 0.0011-0.0036 cm (0.00045-0.0014 in). Thus, in this invention, for box sealing tape, the maximum thickness of the adhesive stripes could be 0.0011 cm or more. Moreover, as discussed below, this tape can be manufactured and coated at much faster coating speeds and with less waste.

The width of the adhesive stripes can range from 0.0127 to 0.1524 cm (0.005 -0.060 in) and the width of the uncoated portions of backing between adjacent stripes of adhesive can range from 0.0635 cm to greater than 0.0 cm (0.025 to 0.0 in), depending on the coating weight and processing conditions (such as the distance between coating plate orifices and the extent of stripe flattening, which is discussed below).

After the tape is coated, the stripes may be flattened. Flattening can be performed, for example, using a roller nip as explained in more detail below. In one embodiment, the flattened adhesive stripes 20 can contact each other (the width of the uncoated portions is 0) to produce a corrugated appearance and to alter the performance characteristics of the tape 10.

In one embodiment, 0.076 cm (0.030 in) unflattened stripes have center-to-center distances of 0.127 cm (0.050 in), yielding a stripe every 0.127 cm (0.050 in) and a ratio (if the entire tape backing is uniformly coated with stripes) of coated area to uncoated area of 3:2. In another embodiment, 0.127 cm (0.050 in) flattened stripes have center-to-center distances of 0.203 cm (0.080 in), yielding a stripe every 0.203 cm (0.080 in) and a ratio (if the entire tape backing is uniformly coated with stripes) of coated area to uncoated area of 5:3. Other embodiments can have any combination of striped adhesive coated areas and striped uncoated areas.

Depending on the pattern and width of the adhesive stripes 20 that are used, a striped tape 10 according to this invention can significantly reduce the amount of adhesive used. This reduction is about 10-20% but can be as much as 30%. This reduces the cost to make the tape, in addition to providing a unique and visually stimulating product. The ribbed pattern provides a reinforced appearance to the tape. Another advantage is that any streaks that may be generated during the coating of the adhesive do not detract from the appearance of the tape, as they do with fully adhesive-coated tapes.

Also, by controlling the thickness, number and width of the adhesive stripes 20, and the width of the non-adhesive stripes 22, one can control the tape performance properties. Using thicker stripes 20 of adhesive, increasing the number of stripes, or decreasing the width of the uncoated portions between adhesive stripes strengthens the adhesive properties of the tape. Using thinner stripes, fewer stripes, or increasing the spacing between stripes generally provides weaker adhesive properties of the tape

In another embodiment of this invention, a tape can be made with stripes of different adhesives. Two or more adhesives can be applied in narrow bands adjacent each other. Figure 2 shows stripes of alternating first, second, and third adhesives 20, 24, 26. The stripes of different adhesives can be separated by non-adhesive stripes 22, as shown, or the various stripes 20, 24, 26 can abut each other without any non-adhesive stripes. When two adhesives are used the pattern of the stripes could be ABABAB, AABAABAAB, or any other combination of two adhesives to give the tape a wider range of application, permitting a tape to perform well in a wider range of environments and situations. Embodiments with multiple adhesives would work well where the tape is to be used in different environments such as warm and cold environments and on different surfaces, such as dry and oily, such as with lane marking tape which must be used in a wide range of road conditions. For example, this would allow application of styrene-isoprene-styrene block copolymer and acrylate adhesives side-by-side. The block copolymer adhesive would work well at normal box closure temperatures, while the acrylate adhesive would work well at colder temperatures. The proper combination of these adhesives would enable a tape to adhere and function well in both situations.

In another embodiment using multiple adhesives, a first adhesive could have a greater thickness than a second adhesive. This could be used, for example, where the first adhesive is less tacky. The tape would be repositionable. The greater thickness, less tacky adhesive could be used to position the tape. If the tape needs repositioning or realigning, this adhesive would permit it. After the tape is properly positioned, the more tacky, second adhesive could be positioned to contact the substrate.

In another embodiment using multiple adhesives, if, for example, a silicone polyurea LAB was used with two hot melt adhesives, such as SIS and acrylate, a useful and interesting tape results. If the acrylate has sufficient acid groups, it will develop a very good bond with the LAB layer and when the tape is unwound, the acrylic adhesive will adhere more strongly to the LAB of the wind of tape underneath it (closer to the center of the roll) than to its own backing and will transfer to the (non-adhesive) surface of the tape, as shown in Figures 3A and 3B. Figure 3A shows several wraps of tape where the first adhesive 20 is SIS and the second adhesive 24 is acrylate This is very desirable for several reasons. First, the adhesive stripe on the LAB would allow for load stabilization; when the tape is used to seal boxes and boxes are stacked on top of each other, the adhesive on the exposed LAB side of the tape would prevent boxes stacked on the tape from shifting easily. Second, this could be a mechanism to attach a label to the exterior of the box. In other versions of this "double-sided" tape, the resulting tape could be used to adhere well selectively to different substrates (such as for furniture veneers) or in different environments. These configurations allow single side coating to be used to make a double-sided tape, allowing higher speed manufacturing.

An additional modification shown in Figure 4 is to provide more than one adhesive along the edge of the tape to yield features and advantages of multiple adhesives along the edges. This can be accomplished several ways. The tape can be coated at an angle. The tape can be coated longitudinally and slit at an angle. The tape and the coater can have relative movement, by oscillating the tape, the coater, or both.

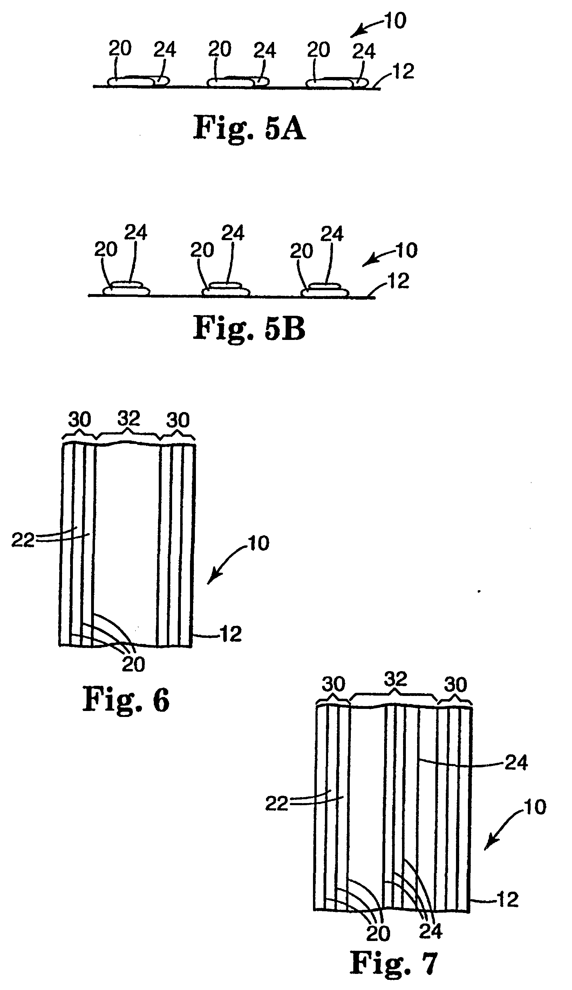

In another modification shown in Figure 5A, at least one stripe of a second adhesive 24 can overlap at least part of at least one stripe of a first adhesive 20. Also, stripes of a second adhesive 24 can reside completely on top of stripes of the first adhesive 20, as shown in Figure 5B. These versions are useful, for example, in having one adhesive that provides quick sticking properties and another that provides strong shear characteristics.

The plurality of stripes of adhesive can be non-uniformly or uniformly spaced. They can be uniformly spaced across the entire width of the tape. Alternatively, the tape can include one or more first portions 30 and one or more second portions 32 that are adjacent each other, as shown in Figure 6. A plurality of first portions 30 can be separated by second portions 32. The plurality of stripes of adhesive 20 can be uniformly spaced across the first portions 30 of the tape 10 and the second portions 32 can include either a plurality of non-uniformly spaced stripes of the first adhesive 20, a second adhesive 24 (as shown in Figure 7), or combinations, or uncoated backing (as shown in Figure 6). These first and second portions 30, 32 can be relatively wide. This version could have application in packaging electronic components.

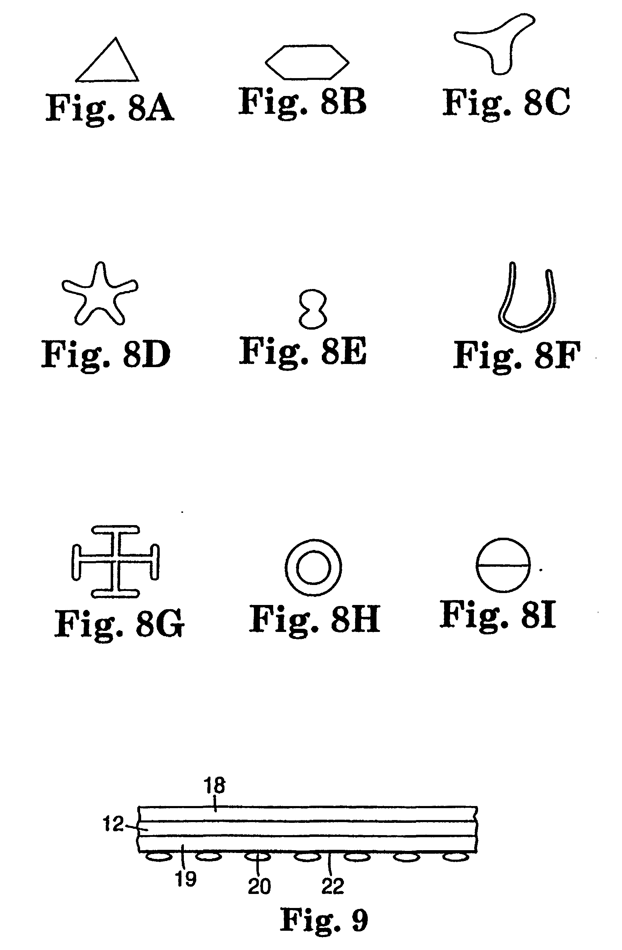

The cross-sectional shape of the stripes could be any shape, such as circular or oval (Figure 1) or can have linear or angular sides such as triangular (Figure 8A), rectangular (Figure 2), or hexagonal (Figure 8B). Other shapes include trilobal (Figure 8C) and pentalobal (Figure 8D), hourglass-shaped (Figure 8E), U-shaped (Figure 8F), and other shapes (Figure 8G). Also, concentric or annular coextruded stripes (Figure 8H) having a sheath material and a core material could be used. For example, the core could be a low cost material, perhaps even a non-adhesive material, and the sheath could be a pressure sensitive adhesive. Alternatively, a pressure sensitive adhesive material could be the core surrounded by a non-pressure sensitive adhesive or even a non-adhesive sheath, with the adhesive activated by heat or other means. Side-by-side bi-components (Figure 8I) also could be used. This stripe could be oriented so that both materials contact the backing layer 12 and the substrate or it could be oriented with one material contacting the backing layer 12 and the other material contacting the substrate. Some shapes lessen the need for flattening the stripes as compared to a circular shape.

Another possible variation of the tape of this invention for making a similar tape may be to use a swirl pattern with a very fine line of adhesive. An oval pattern can be created with a very fine line spray, building up ridges of adhesive with overlapping ovals. The swirls in adjacent stripes could be separated or could build upon each other with no gap between them.

In another modification of the invention, an additional layer of material 19 can be formed, such as by coating, on the first side 14 of the backing layer 12, as shown in Figure 9. The stripes 20 are coated on this additional layer 19. This additional layer 19 can be adhesive or non-adhesive. It can even be the same adhesive as that used for the stripes 20. In a twist on this configuration, the layer 19 could be adhesive and the stripes 20 could be a non-adhesive material. Such a configuration can be used to allow a tape to be properly positioned and repositioned on a surface before final affixing.

The adhesive tape invention can be used in any arena that adhesive tape is used today. For example, the tape can be used as a box sealing tape. The tape can be made by many different methods, for example, with a rotary rod die with multiple openings. Also, a rotary screen printer could be used to make this tape and produce adhesive stripe patterns. Other dies, such as NRL dies (Naval Research Laboratories melt blown fiber dies) and drilled orifice dies also can be used.

The invention also is a novel die that can make stripe coated tapes. This die is called a multiple orifice drop die 40. The drop die 40 can coat hot melts and higher viscosity materials (1,000 to 200,000 centipoise at 375°F) with extensional properties (the materials are stringy). Materials other than hot melts would be coated without using nip rolls (described below). Stripes could be applied onto the substrate and allowed to flow until dried or cured. Also, stripes could be applied using a contact die in which the lip is used to flatten the stripes.

Using this die 40, faster coating speeds can be attained when coating adhesive stripes as compared with fully coating the entire width of the backing layer. This is due, at least in part, to the elimination of the "necking-down" problems associated with conventional drop die coating because although the stripes "neck-down" individually, this does not impair the overall coated tape. Moreover, with this invention, narrower stripes can be coated, as compared with known contact coater methods. Also, the range of material viscosities, and coating weights is larger with this invention.

Additionally, by coating with a multiple orifice drop die 40, as compared to a slot fed drop die, there are no thick edge beads because there is no "necking-down" of the adhesive. Each strand drops straight down and "necks-down" individually, which does not affect the total coating width. (This is a significant improvement over non-striped coatings, which "neck-down" as a sheet and prevent uniform edge to edge coating.) Thus, the tape can be coated from edge to edge, if desired, and virtually the entire coated width of tape can be used, reducing waste. Using a multiple orifice drop die 40 creates individual strands of coating (adhesive stripes in the illustrated embodiments) which drop to the tape backing and remain as individual strands during the entire coating process. The strands maintain their integrity and stay separate and are coated on the backing where they become separate stripes of adhesive.

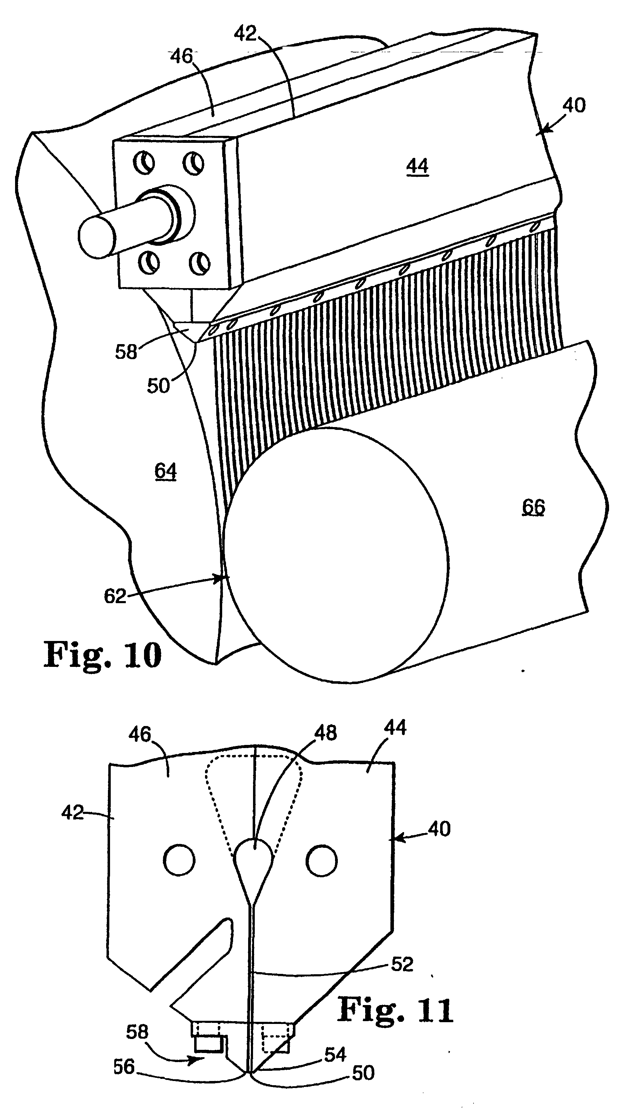

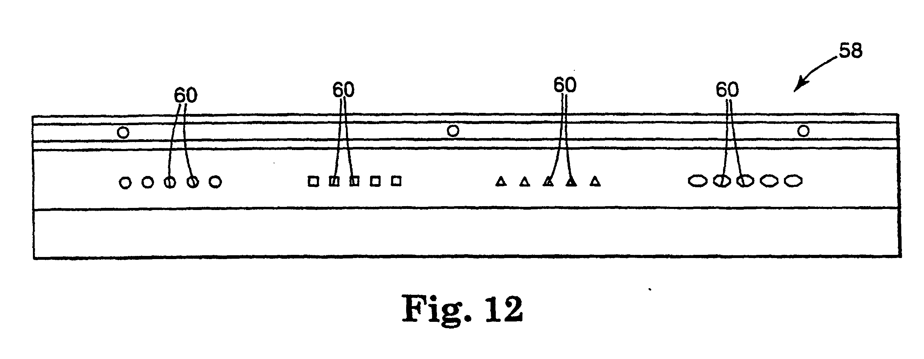

Figures 10, 11, and 12 show the components of a multiple orifice drop die 40. In the multiple orifice drop die 40, a flowable material is forced to flow into the die body 42, which has a first half or top plate 44 and a second half or bottom plate 46, which together form a manifold 48 which is generally a tapered tear drop type of manifold typically used for hot melts. An internal choker bar (not shown) can also be used to modify crossweb uniformity. The material exits from the die slot exit 50 of the slot 52. The portions of the die body 42 adjacent the exit 50 are known as the top die lip 54 and the bottom die lip 56. The die slot exit 50 is covered by a separate component, a face plate 58, which includes the top die lip 54 and the bottom die lip 56. The face plate 58 can be bolted to the manifold 48 on the front of the multiple orifice drop die 40 and can be removed and replaced without taking apart the die.

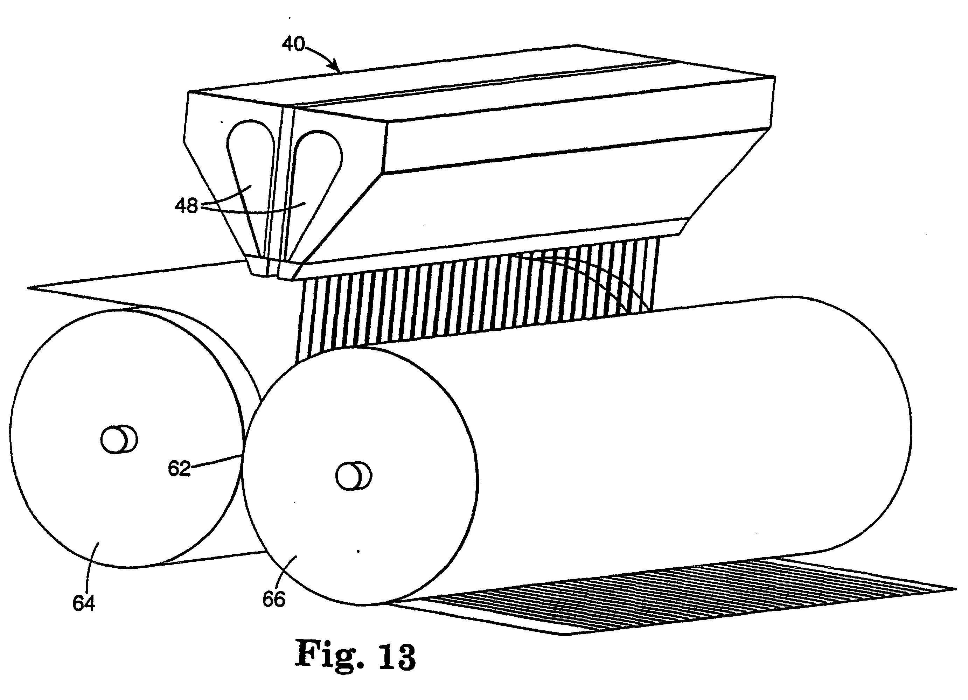

A series of holes or orifices 60 are formed in the face plate 58 through which the adhesive exits the die. With the multiple orifice drop die 40, the adhesive drops or is drawn from the die onto a web, such as a backing. This type of die can coat two or more different adhesives (as discussed above) from separate manifolds (such as in a dual manifold die with a temperature isolation plate) at different temperatures, to prevent adhesive degradation and allow control of the viscosities of the adhesives to better match them up. Such a die is shown in Figure.13. As an alternative to using a multiple orifice drop die, a plurality of single orifice drop dies can be used.

After the stripes are coated onto the backing, the stripe-coated backing is passed through a roller nip 62 that flattens the round adhesive stripes, spreading or widening the stripes in the crossweb direction to a predetermined stripe width and thickness. The stripe width and thickness can be controlled by the nip pressure or the gap between the rolls. This increases the coverage of adhesive. The rollers can include a release-coated steel roll 64 and a hard rubber roll 66. The overall adhesive coating weight (including the uncoated and coated areas) may be equal to or less than that of the backing coated by a conventional drop die (non-stripe coating), yet have equivalent tape properties, such as peel adhesion, tack, shear adhesion, and bonding effectiveness. The thickness (height) of the flattened stripes is greater than that of tape made with a conventional drop die with the same coating weight of adhesive. When coating multiple adhesives, generally, one adhesive is dropped onto the backing and the other adhesive is dropped onto the release roll 64. The various adhesive stripes then pass through the nip 62.

By using the multiple orifice drop die 40 of this invention, changing stripe configurations is relatively simple. Unlike known systems, the stripes are created by orifices 60 which can be located in the face plate which is separate from and bolted to the die body 42 on the front of the die. The face plate 58 can be removed and replaced without taking apart the die to change the coating pattern. The adhesive is pumped into the manifold 48 and exits the die 40 through the face plate 58, which contains the orifices 60 in a predetermined hole size, shape, spacing, and in some cases, hole pattern. Although the stripes can be formed in known dies by using shims, the individual shim elements would be very narrow and delicate, and could easily bend. Also, it is possible to machine orifices in a one- or two piece die, but this would not allow easy changeover as described above.

By coating a plurality of stripes of adhesive, less adhesive is used. Thus, during the manufacture of the tape, there is less, and sometimes no, adhesive buildup on the cutting knives used to cut and slit the tape. For example, slitting in the uncoated area would eliminate adhesive buildup on the knives. Another advantage of this is that it enables producing a roll of tape with "dry" edges; that is, the slit flat side is not sticky. This can yield an adhesive tape roll with an extended backing layer, which provides the non-tacky edge, and eliminates the need to de-tack the edge or insert wafers between the rolls when boxing the tape.

## Claims

1. An adhesive box sealing tape 10 comprising:
a backing 12 having a first side 14 and a second side 16; and
a plurality of first segments of a first adhesive coated on the first side 14 of the backing 12;
a plurality of second segments uncoated by adhesive, wherein the plurality of first segments are separated by the plurality of second segments and wherein the width of the segments and the properties of the adhesive are selected such that the plurality of first segments and the plurality of second segments together create an adhesive portion of the tape that functions as a continuous band of adhesive such that the second segments are part of the adhesive portion and do not form a functional non-adhesive portion.

2. The adhesive box sealing tape 10 of dalm 1 wherein the tape has similar adhesive performance characteristics as a compositionally similar tape having the same backing and at least the same coating weight of the same adhesive coated across the entire surface of the backing.

3. The adhesive box sealing tape 10 of claim 2 wherein the tape uses at least 10% less adhesive as a similar tape having the same thickness of the same adhesive coated across the entire width of the tape.

4. The adhesive box sealing tape 10 of claim 1 further comprising a layer 19 of non-adhesive material coated on the first side 14 of the backing 12, wherein the first segments and second segments are on the layer of material.

5. The adhesive box sealing tape 10 of dalm 1 wherein the first segments are first stripes 20 and the second segments are second stripes 22, and wherein the width of the first stripes 20 and the width of the second stripes 22 are selected in combination with each other to control the tape properties.

6. The adhesive box sealing tape 10 of claim 5 wherein the tape has longitudinal edges along which a respective second stripe 22 resides such that there is no adhesive along the longitudinal edges.

7. The adhesive box sealing tape 10 of claim 5 wherein the tape comprises at least one first portion 30 and at least one non-adhesive second portion 32, wherein the first and second portions are adjacent each other and wherein all the first and second stripes 20, 22 are spaced across the first portions of the tape.

8. The adhesive box sealing tape 10 of claim 7 wherein the tape comprises at least two first portions 30 and the plurality of first and second stripes 20, 22 in the first portions are separated by the second portions 32 of tape, and wherein the plurality of first and second stripes are uniformly spaced across the first portions of the tape and the second portions comprise one of a plurality of first and second stripes that are non-uniformly spaced, a plurality of third stripes 26 of a second adhesive, and uncoated backing.

9. The adhesive box sealing tape 10 of claim 7 wherein the tape comprises at least two second portions 32 and has longitudinal edges along which a respective second portion resides such that there is no adhesive along the longitudinal edges.

10. The adhesive box sealing tape 10 of claim 5 wherein the ratio of the width of the first stripes 20 to the width of the second stripes 22 ranges from 2:1 to 10:1 and wherein the width of the first stripes ranges from 0.0127 to 0.1524 cm and the width of the second stripes ranges from 0.0635 to greater than 0.0 cm or wherein the width of the second stripes is zero after flattening of the tape with a roller nip, such that the adjacent first stripes contact each other to form a coating having a nonuniform varying. thickness and a corrugated appearance.

11. The adhesive box sealing tape 10 of claim 1 further comprising:
a plurality of third segments of a second adhesive coated on the first side 14 of the backing 12, wherein the first adhesive is selected to perform different functions than the second adhesive, thereby broadening the range of effectiveness of the adhesive tape, wherein the plurality of first segments are separated from each other and the plurality of third segments are separated from each other by at least the plurality of second segments such that the plurality of first segments, second segments, and third segments together create an adhesive portion of the tape that functions as a continuous band of adhesive.

12. The adhesive box sealing tape 10 of claim 11 wherein at least one third segment overlaps at least part of at least one first segment.

13. The adhesive box sealing tape 10 of claim 11 wherein the tape comprises at least some of both the first and third segments located along at least a portion of at least one edge of the tape.

14. The adhesive box sealing tape 10 of daim 11 further comprising an LAB layer 18 on the second side 16 of the backing 12, wherein the second adhesive adheres more strongly to the LAB than to the backing and the first adhesive adheres more strongly to the backing than to the LAB when the tape Is wound into a roll having a plurality of winds of tape such that when the tape Is subsequently unwound, the first adhesive remains on the first side of the backing and the second adhesive transfers to the LAB layer on the second side of the backing of the wind of tape underneath it.

15. A method of making adhesive box sealing tape comprising the steps of:
selecting a backing 12 having a first side 14 and a second side 16;
selecting at least a first adhesive to coat on at least part of the first side of the backing;
selecting a desired coating weight of the first adhesive;
selecting a width for first segments of the first adhesive;
selecting a width greater than zero for second segments uncoated by adhesive in combination with the width of the first segments to attain desired tape properties;
and
coating a plurality of first segments on the first side of the backing, wherein the first segments have the selected width and the second segments have the selected width, wherein the coating step comprises drop die coating the plurality of first segments on the backing without causing any "necking-down" problems of the first segments while they are being placed onto the backing.

16. The method of claim 15 further comprising the step of passing the adhesive segment-coated backing through a roller nip 62 to flatten the first segments.

17. The method of claim 16 wherein the coating step comprises passing the adhesive through a plurality of orifices 60 In at least one multiple orifice drop die 40 to create the first segments while the adhesive is being coated onto the backing 12.

18. The method of claim 15 wherein the segments are stripes and the width of the first stripes 20 ranges from 0.0127 to 0.1524 cm and the width of the second stripes 22 ranges from 0.0635 to greater than 0.0 cm.

19. The method of claim 15 further comprising:
selecting at least a second adhesive to coat on at least part of the first side 14 of the backing 12;
selecting a width for third segments of the second adhesive in combination with the width of the first segments and the width of the second segments to attain desired tape properties;
coating a plurality of third segments on the first side 14 of the backing 12,
wherein the first segments, second segments, and third segments have the selected width, wherein the coating step comprises drop die coating the plurality of third segments on the backing without causing any "necking-down" problems of the segments.

20. A die 40 for stripe coating a substrate comprising:
a first die block 44 having a front;
a second die block 46 having a front and located adjacent the first die block to form a first slot 52 between the first die block and the second die block that has an exit 50 at the front of the first and second die blocks;
means 48 for supplying fluid to the slot;
a face plate 58 mounted across the fronts of the first and second die blocks and having a plurality of orifices 60 formed therein such that fluid flowing In the die through the first slot can exit through the orifices In the face plate in a plurality of stripes, wherein the face plate Is easily removable and replaceable to facilitate cleaning the die and to facilitate changing the orifice pattern to change the pattern of coated stripes on the substrate.

21. The die of claim 20 wherein the means for supplying fluid comprises first and second manifolds 48 located In the die and formed in at least one of the die blocks and a second slot, wherein the die can coat a first coating through the first slot and a second coating through the second slot.

## Patentansprüche

1. Kartonklebeband 10, umfassend:
einen Träger 12 mit einer ersten Seite 14 und einer zweiten Seite 16; und
eine Menge von ersten Segmenten mit einem ersten Kleber, der auf die erste Seite 14 des Trägers 12 aufgetragen ist;
eine Menge von zweiten Segmenten, die nicht mit Kleber beschichtet sind, wobei die Segmente der ersten Menge durch die Segmente der zweiten Menge voneinander getrennt sind und wobei die Breite der Segmente und die Eigenschaften des Klebers so gewählt werden, dass die Menge der ersten Segmente und die Menge der zweiten Segmente zusammen einen klebrigen Teil des Bandes bilden, der als kontinuierliches Klebeband fungiert, so dass die zweiten Segmente einen Teil des klebrigen Teils bilden und keinen funktionellen nichtklebrigen Teil bilden.

2. Kartonklebeband 10 gemäß Anspruch 1, wobei das Band ähnliche Klebeeigenschaften hat wie ein Band ähnlicher Zusammensetzung, das denselben Träger und wenigstens dasselbe Beschichtungsgewicht desselben Klebers, der über die gesamte Oberfläche des Trägers aufgetragen ist, aufweist.

3. Kartonklebeband 10 gemäß Anspruch 2, wobei das Band wenigstens 10% weniger Kleber verwendet als ein ähnliches Band, das dieselbe Dicke desselben Klebers, der über die gesamte Breite des Bandes aufgetragen ist, aufweist.

4. Kartonklebeband 10 gemäß Anspruch 1, das weiterhin eine Schicht 19 aus nichtklebrigem Material umfasst, das auf die erste Seite 14 des Trägers 12 aufgetragen ist, wobei sich die ersten Segmente und die zweiten Segmente auf der Schicht des Materials befinden.

5. Kartonklebeband 10 gemäß Anspruch 1, wobei die ersten Segmente erste Streifen 20 sind und die zweiten Segmente zweite Streifen 22 sind und wobei die Breite der ersten Streifen 20 und die Breite der zweiten Streifen 22 in Kombination miteinander ausgewählt werden, um die Eigenschaften des Bandes zu steuern.

6. Kartonklebeband 10 gemäß Anspruch 5, wobei das Band Längsränder hat, entlang derer sich jeweils ein zweiter Streifen 22 befindet, so dass es keinen Kleber entlang der Längsränder gibt.

7. Kartonklebeband 10 gemäß Anspruch 5, wobei das Band wenigstens einen ersten Teil 30 und wenigstens einen nichtklebrigen zweiten Teil 32 umfasst, wobei der erste und der zweite Teil nebeneinander liegen und wobei alle ersten und zweiten Streifen 20, 22 über die ersten Teile des Bandes hinweg voneinander beabstandet sind.

8. Kartonklebeband 10 gemäß Anspruch 7, wobei das Band wenigstens zwei erste Teile 30 umfasst und die Menge der ersten und zweiten Streifen 20, 22 in den ersten Teilen durch die zweiten Teile 32 des Bandes voneinander getrennt sind und wobei die Menge der ersten und zweiten Streifen über die ersten Teile des Bandes hinweg gleichmäßig voneinander beabstandet sind und die zweiten Teile entweder eine Menge erster und zweiter Streifen, die ungleichmäßig voneinander beabstandet sind, eine Menge dritter Streifen 26 aus einem zweiten Kleber oder unbeschichteten Träger umfassen.

9. Kartonklebeband 10 gemäß Anspruch 7, wobei das Band wenigstens zwei zweite Teile 32 umfasst und Längsränder hat, entlang derer sich jeweils ein zweiter Teil befindet, so dass es keinen Kleber entlang der Längsränder gibt.

10. Kartonklebeband 10 gemäß Anspruch 5, wobei das Verhältnis der Breite der ersten Streifen 20 zur Breite der zweiten Streifen 22 im Bereich von 2:1 bis 10:1 liegt und wobei die Breite der ersten Streifen im Bereich von 0,0127 bis 0,1524 cm liegt und die Breite der zweiten Streifen im Bereich von 0,0635 bis mehr als 0,0 cm liegt oder wobei die Breite der zweiten Streifen Null ist, nachdem das Band mit einem Walzenspalt abgeflacht wurde, so dass die benachbarten ersten Streifen einander berühren, so dass eine Beschichtung entsteht mit einer ungleichmäßigen variierenden Dicke und einem gewellten Erscheinungsbild entsteht.

11. Kartonklebeband 10 gemäß Anspruch 1, das weiterhin folgendes umfasst:
eine Menge von dritten Segmenten aus einem zweiten Kleber, der auf die erste Seite 14 des Trägers 12 aufgetragen ist, wobei der erste Kleber so ausgewählt ist, dass er andere Funktionen als der zweite Kleber erfüllt, wodurch der Bereich der Wirksamkeit des Klebebandes erweitert wird, wobei die Segmente der ersten Menge voneinander und die Segmente der dritten Menge voneinander wenigstens durch die Segmente der zweiten Menge getrennt sind, so dass die Menge der ersten Segmente, der zweiten Segmente und der dritten Segmente zusammen einen klebrigen Teil des Bandes bilden, der als kontinuierliches Klebeband fungiert.

12. Kartonklebeband 10 gemäß Anspruch 11, wobei wenigstens ein drittes Segment wenigstens einen Teil wenigstens eines ersten Segments überlappt.

13. Kartonklebeband 10 gemäß Anspruch 11, wobei das Band wenigstens einen Teil sowohl der ersten als auch der dritten Segmente entlang wenigstens einem Teil wenigstens eines Randes des Bandes umfasst.

14. Kartonklebeband 10 gemäß Anspruch 11, das weiterhin eine LAB-Schicht 18 auf der zweiten Seite 16 des Trägers 12 umfasst, wobei der zweite Kleber stärker an dem LAB haftet als an dem Träger und der erste Kleber stärker an dem Träger haftet als an dem LAB, wenn das Band zu einer Rolle mit einer Vielzahl von Bandwicklungen gewickelt wird, so dass beim anschließenden Abwickeln des Bandes der erste Kleber auf der ersten Seite des Träger bleibt und der zweite Kleber auf die LAB-Schicht auf der zweiten Seite des Trägers der sich darunter befindenden Bandwicklung übertragen wird.

15. Verfahren zur Herstellung von Kartonklebeband, das die folgenden Schritte umfasst:
Auswählen eines Trägers 12 mit einer ersten Seite 14 und einer zweiten Seite 16;
Auswählen wenigstens eines ersten Klebers zum Auftragen auf wenigstens einen Teil der ersten Seite des Trägers;
Auswählen eines gewünschten Beschichtungsgewichts des ersten Klebers;
Auswählen einer Breite für erste Segmente des ersten Klebers;
Auswählen einer Breite, die größer als Null ist, für zweite Segmente, die nicht mit Kleber beschichtet sind, in Kombination mit der Breite der ersten Segmente, so dass man gewünschte Bandeigenschaften erreicht; und
Auftragen einer Menge von ersten Segmenten auf die erste Seite des Trägers, wobei die ersten Segmente die ausgewählte Breite haben und die zweiten Segmente die ausgewählte Breite haben, wobei der Schritt des Auftragens die Falldüsenauftragung der Menge der ersten Segmente auf den Träger umfasst, ohne irgendwelche "Verstreckungsprobleme" der ersten Segmente zu verursachen, während sie auf dem Träger platziert werden.

16. Verfahren gemäß Anspruch 15, das weiterhin den Schritt des Durchführens des mit Klebersegment beschichteten Trägers durch einen Walzenspalt 62 umfasst, so dass die ersten Segmente abgeflacht werden.

17. Verfahren gemäß Anspruch 16, wobei der Schritt des Auftragens das Durchleiten des Klebers durch eine Menge von Öffnungen 60 in wenigstens einer Falldüse 40 mit mehreren Öffnungen umfasst, so dass die ersten Segmente entstehen, während der Kleber auf den Träger 12 aufgetragen wird.

18. Verfahren gemäß Anspruch 15, wobei die Segmente Streifen sind und die Breite der ersten Streifen 20 im Bereich von 0,0127 bis 0,1524 cm liegt und die Breite der zweiten Streifen 22 im Bereich von 0,0635 bis mehr als 0,0 cm liegt.

19. Verfahren gemäß Anspruch 15, das weiterhin folgendes umfasst:
Auswählen wenigstens eines zweiten Klebers zum Auftragen auf wenigstens einen Teil der ersten Seite 14 des Trägers 12;
Auswählen einer Breite für dritte Segmente des zweiten Klebers in Kombination mit der Breite der ersten Segmente und der Breite der zweiten Segmente, so dass man gewünschte Bandeigenschaften erreicht;
Auftragen einer Menge von dritten Segmenten auf die erste Seite 14 des Trägers 12, wobei die ersten Segmente, die zweiten Segmente und die dritten Segmente die ausgewählte Breite haben, wobei der Schritt des Auftragens die Falldüsenauftragung der Menge der dritten Segmente auf den Träger umfasst, ohne irgendwelche "Verstreckungsprobleme" der Segmente zu verursachen.

20. Düse 40 für die Streifenbeschichtung eines Substrats, umfassend:
einen ersten Düsenblock 44 mit einer Vorderseite;
einen zweiten Düsenblock 46 mit einer Vorderseite, der sich neben dem ersten Düsenblock befindet, so dass ein erster Schlitz 52 zwischen dem ersten Düsenblock und dem zweiten Düsenblock entsteht, der einen Ausgang 50 auf der Vorderseite des ersten und des zweiten Düsenblocks aufweist;
eine Einrichtung 48 zum Zuführen einer Flüssigkeit zu dem Schlitz;
eine Frontplatte 58, die über die Vorderseiten des ersten und des zweiten Düsenblocks montiert ist und eine Menge von darin gebildeten Öffnungen 60 aufweist, so dass Flüssigkeit, die durch den ersten Schlitz in die Düse fließt, in einer Menge von Streifen durch die Öffnungen in der Frontplatte austreten kann, wobei die Frontplatte leicht entfernt und ersetzt werden kann, um die Reinigung der Düse zu erleichtern und um das Wechseln des Öffnungsmusters zur Änderung des Musters der auf das Substrat aufgetragenen Streifen zu erleichtern.

21. Düse gemäß Anspruch 20, wobei die Einrichtung zum Zuführen der Flüssigkeit ein erstes und ein zweites Verteilerstück 48 umfasst, die sich in der Düse befinden und in wenigstens einem der Düsenblöcke und einem zweiten Schlitz gebildet sind, wobei die Düse durch den ersten Schlitz eine erste Beschichtung und durch den zweiten Schlitz eine zweite Beschichtung auftragen kann.

## Revendications

1. Ruban d' étanchéité enduit d'adhésif 10 comprenant :
un support dorsal 12 ayant une première face 14 et une seconde face 16 ; et
une pluralité de premiers segments d'un premier adhésif enduit sur la première face 14 du support dorsal 12 ;
une pluralité de deuxièmes segments non-enduits par un adhésif, dans lequel la pluralité de premiers segments est séparée par la pluralité de deuxièmes segments et dans lequel la largeur des segments et les propriétés de l'adhésif sont sélectionnées de telle sorte que la pluralité de premiers segments et la pluralité de deuxièmes segments créent ensemble une partie adhésive du ruban qui fonctionne comme une bande continue d'adhésif de telle sorte que les deuxièmes segments font partie de la partie adhésive et ne forment pas une partie fonctionnelle non adhésive.

2. Ruban d'étanchéité enduit d'adhésif 10 selon la revendication 1, dans lequel le ruban a des caractéristiques de performance adhésive similaires telles qu'un ruban similaire par composition ayant le même support dorsal et au moins le même poids d'enduit du même adhésif enduit à travers toute la surface du support dorsal.

3. Ruban d'étanchéité enduit d'adhésif 10 selon la revendication 2, dans lequel le ruban utilise au moins 10% de moins d'adhésif qu'un ruban similaire ayant la même épaisseur du même adhésif enduit à travers toute la largeur du ruban.

4. Ruban d'étanchéité enduit d'adhésif 10 selon la revendication 1 comprenant en outre une couche 19 de matériau non adhésif enduit sur la première face 14 du support dorsal 12, dans lequel les premiers segments et les deuxièmes segments sont sur la couche de matériau.

5. Ruban d' étanchéité enduit d'adhésif 10 selon la revendication 1, dans lequel les premiers segments sont les premières rayures 20 et les deuxièmes segments sont les deuxièmes rayures 22, et dans lequel la largeur des premières rayures 20 et la largeur des deuxièmes rayures 22 sont sélectionnées en combinaison avec l'une et l'autre afin de contrôler les propriétés du ruban.

6. Ruban d'étanchéite enduit d'adhésif 10 selon la revendication 5, dans lequel le ruban a des arêtes longitudinales le long desquelles une deuxième rayure respective 22 se trouve de telle sorte qu'il n'y a aucun adhésif le long des arêtes longitudinales.

7. Ruban d'étanchéité enduit d'adhésif 10 selon la revendication 5, dans lequel le ruban comprend au moins une première partie 30 et au moins une seconde partie non adhésive 32, dans lequel la première et la seconde parties sont adjacentes l'une à l'autre et dans lequel toutes les premières et les deuxièmes rayures 20, 22 sont espacées à travers les premières parties du ruban.

8. Ruban d'étanchéité enduit d'adhésif 10 selon la revendication 7, dans lequel le ruban comprend au moins deux premières parties 30 et la pluralité des premières et des deuxièmes rayures 20, 22 dans les premières parties sont séparées par les secondes parties 32 du ruban, et dans lequel la pluralité des premières et des deuxièmes rayures sont uniformément espacées à travers les premières parties du ruban et les secondes parties comprennent l'une de la pluralité des premières et des deuxièmes rayures qui sont uniformément espacées, une pluralité de troisièmes rayures 26 d'un second adhésif, et un support dorsal non enduit.

9. Ruban d'étanchéité enduit d'adhésif 10 selon la revendication 7, dans lequel le ruban comprend au moins deux secondes parties 32 et a des arêtes longitudinales le long desquelles une seconde partie respective se trouve de telle sorte qu'il n'y aucun adhésif le long des arêtes longitudinales.

10. Ruban d' étanchéité enduit d'adhésif 10 selon la revendication 5, dans lequel le rapport de la largeur des premières rayures 20 par rapport à la largeur des deuxièmes rayures 22 s'étend de 2 : 1 à 10 : 1 et dans lequel la largeur des premières rayures. s'étend de 0.0127 à 0.1524 cm et la largeur des deuxièmes rayures va de 0.0635 à plus de 0.0 cm ou dans lequel la largeur des deuxièmes rayures est de zéro après l'aplatissement du ruban avec une ligne de contact, de telle sorte que les premières rayures adjacentes entrent en contact les unes avec les autres afin de former un enduit ayant une épaisseur variable non uniforme et un aspect ondulé.

11. Ruban d'étanchéité enduit d'adhésif 10 selon la revendication 1 comprenant en outre :
une pluralité de troisièmes segments d'un second adhésif enduit sur la première face 14 du support dorsal 12, dans lequel le premier adhésif est sélectionné pour exécuter des fonctions différentes que celles du second adhésif, élargissant par ce moyen la gamme d'efficacité du ruban adhésif, dans lequel la pluralité de premiers segments sont séparés des uns des autres et la pluralité de troisièmes segments sont séparés des uns des autres par au moins la pluralité de seconds segments de telle sorte que la pluralité de premiers segments, de deuxièmes segments et de troisièmes segments créent ensemble une partie adhésive du ruban qui fonctionne comme une bande continue d'adhésif.

12. Ruban d'étanchéité enduit d'adhésif 10 selon la revendication 11, dans lequel au moins un troisième segment chevauche au moins la partie d'au moins un premier segment.

13. Ruban d'étanchéité enduit d'adhésif 10 selon la revendication 11, dans lequel le ruban comprend au moins certains des deux premiers et troisièmes segments situés le long au moins d'une partie d'au moins une arête du ruban.

14. Ruban d' étanchéité enduit d'adhésif 10 selon la revendication 11 comprenant en outre une couche à doublage par adhésif laminé 18 sur la seconde face 16 du support dorsal 12, dans lequel le second adhésif adhère plus fortement au doublage adhésif laminé qu'au support dorsal et le premier adhésif adhère plus fortement au support dorsal qu'au doublage adhésif laminé lorsque le ruban est enroulé dans un rouleau ayant une pluralité d'enroulements du ruban de telle sorte que lorsque le ruban est déroulé par la suite, le premier adhésif reste sur la première face du support dorsal et le second adhésif va jusqu'à la couche à doublage adhésif laminé sur la seconde face du support dorsal de l'enroulement du ruban sous cette dernière.

15. Procédé pour rendre adhésif un ruban d'étanchéité comprenant les étapes consistant à :
sélectionner un support dorsal 12 ayant une première face 14 et une seconde face 16 ;
sélectionner au moins un premier adhésif pour enduire sur au moins une partie de la première face du support dorsal ;
sélectionner un poids d'enduit désiré du premier. adhésif ;
sélectionner une largeur pour les premiers segments du premier adhésif ;
sélectionner une largeur supérieure à zéro pour les deuxièmes segments enduits par l'adhésif en combinaison avec la largeur des premiers segments afin d'obtenir les propriétés du ruban désirées ;
et
enduire une pluralité de premiers segments sur la première face du support dorsal, dans lequel les premiers segments ont la largeur sélectionnée et les deuxièmes segments ont la largeur sélectionnée, dans lequel l'étape d'enduction comprend le poteyage de la pluralité des premiers segments sur le support dorsal sans causer de problèmes de « striction » des premiers segments alors qu'ils sont placés sur le support dorsal.

16. Procédé selon la revendication 15 comprenant, en outre, l'étape consistant à faire passer le support dorsal enduit de segment adhésif à travers une ligne de contact 62 pour aplatir les premiers segments.

17. Procédé selon la revendication 16, dans lequel l'étape d'enduction comprend le passage de l'adhésif à travers une pluralité d'orifices 60 dans au moins une matrice à forger à orifices multiples 40 pour créer les premiers segments pendant que l'on est en train d'enduire l'adhésif sur le support dorsal 12.

18. Procédé selon la revendication 15, dans lequel les segments sont des rayures et la largeur des premières rayures 20 s'étend de 0.0127 à 0.1524 cm et la largeur des deuxièmes rayures 22 va de 0.0635 à plus de 0.0 cm.

19. Procédé selon la revendication 15 comprenant en outre :
la sélection d'au moins un second adhésif pour enduire au moins une partie de la première face 14 du support dorsal 12 ;
la sélection d'une largeur pour les troisièmes segments du second adhésif en combinaison avec la largeur des premiers segments et la largeur de deuxièmes segments afin d'obtenir les propriétés du ruban désirées ;
l'enduction d'une pluralité de troisièmes segments sur la première face 14 du support dorsal 12, dans lequel les premiers segments, les deuxièmes segments, et les troisièmes segments ont la largeur sélectionnée, dans lequel l' étape d'enduction comprend le poteyage de la pluralité de troisièmes segments sur le support dorsal sans causer de problèmes de « striction » des segments.

20. Matrice 40 pour l'enduction à rayure d'un substrat comprenant ;
un premier bloc de matrice 44 ayant une face avant ;
un second bloc de matrice 46 ayant une face avant et situé de façon adjacente au premier bloc de matrice pour former une première fente 52 entre le premier bloc de matrice et le second bloc de matrice qui a une sortie 50 à l'avant du premier et du second blocs de matrice ;
le moyen 48 d'alimenter du fluide jusqu'à la fente ;
un plateau à trous 58 monté à travers les faces avant du premier et du second blocs de matrice et ayant une pluralité d'orifices 60 formés à l'intérieur de ce dernier de telle sorte que le fluide circulant dans la matrice à travers la première fente peut sortir à travers les orifices dans le plateau à trous dans une pluralité de rayures, dans laquelle le plateau à trous est facilement retirable et remplaçable pour faciliter le nettoyage de la matrice et pour faciliter le changement du calibre de l'orifice afin de changer le calibre des rayures enduites sur le substrat.

21. Matrice selon la revendication 20, dans laquelle le moyen d'alimenter du fluide comprend les premières et les secondes tubulures 48 situées dans la matrice et formées dans au moins l'une des matrices et une seconde fente, dans laquelle la matrice peut enduire un premier enduit à travers la première fente et un second enduit à travers la seconde fente.
